# EUROPÄISCHE PATENTSCHRIFT

(11) **EP 0 818 865 B1**
(45) Veröffentlichungstag und Bekanntmachung des Hinweises auf die Patenterteilung: **16.05.2001**
(21) Anmeldenummer: 97111786.6
(22) Anmeldetag: 11.07.1997
(51) Int. Cl.: H02H 7/085, H02H 3/05

(54) **Grenzwertschalter**
Limit switch
Interrupteur à valeur limite

(30) Priorität: 13.07.1996 DE 19628364
(43) Veröffentlichungstag der Anmeldung: 14.01.1998
(73) Patentinhaber: Müller, Matthias, 31535 Neustadt (DE)
(72) Erfinder: Müller, Matthias, 31535 Neustadt (DE)
(74) Vertreter: Patentanwälte Thömen & Körner

(56) Entgegenhaltungen:
- EP-A- 0 364 994
- DE-A- 2 641 082
- DE-A- 3 020 480
- US-A- 4 394 607

## Beschreibung

Die Erfindung betrifft einen Grenzwertschalter nach dem Oberbegriff des Anspruchs 1.

Bei Hebezeugen, Krananlagen und in der Theatertechnik werden Lastaufnehmer verwendet, die mit einem Grenzwertschalter verbunden sind. Der Grenzwertschalter ist in den Sicherheitskreis von Antrieben eingeschaltet und dient dazu, bei Überlastung die Antriebe abzuschalten oder das Anlaufen oder Einschalten zu verhindern.

Bisherige Grenzwertschalter arbeiten in analoger Technik. Die Einstellung der Grenzwerte wird über Potentiometer vorgenommen. Sind mehrere Grenzwerte oder Parameter der Grenzwerte einstellbar, so beeinflussen sich häufig die eingestellten Werte gegenseitig, so daß die endgültigen Werte erst nach mehrmaligem Nachjustieren erreicht werden. Auch sind die eingestellten Werte häufig Temperatur-und Alterungseinflüssen unterworfen, so daß von Zeit zu Zeit eine Nachjustierung erforderlich ist. Wegen der Komplexität der Einstellmaßnahmen müssen diese von eingewiesenem Personal durchgeführt werden.

Die Digitaltechnik bietet zwar die Möglichkeit, die Einstellung und Überwachung sowie die Anzeige der Grenzwerte und Parameter zu vereinfachen und dabei störende Beeinflussungen der Einstellungen untereinander zu vermeiden, seitens der für die Abnahme derartiger Grenzwertschalter zuständigen Prüfinstitute bestehen jedoch Bedenken hinsichtlich der Sicherheit und Zuverlässigkeit digitaler Schaltungen. Dies beruht einerseits darauf, daß digitale Schaltungen schwer und nicht immer zuverlässig auf Fehler überprüfbar sind, die z.B. auf Programmfehlern beruhen und daß andererseits Störungen leicht Zustände veranlassen können, die statt Sicherheit vielmehr eine Gefährdung herbeiführen.

Dokument EP-A-0 364 994 (MAN GHH KRANTECHNIK) offenbart eine Kransteuerung mit Anzeige- und digitaler Eingabeeinheit, für welche eine einkanalige speicherprogrammierte Steuerung (SPS) der Schütze der Antriebsmotoren in Form eines Mikroprozessors Anwendung findet. Die SPS steuert das Hubwerk und den Auslegerantrieb abhängig von gespeicherten Grenzdaten und den Meßsignalen der Meßgeber.

In Dokument US-A-4 394 607 (LEMIRANDE RODGER P), einem Kontrollsystem für einen Motor-Überlastschutz, ist ein Komparator zur Erkennung eines Überlastzustandes eingesetzt.

Ein Verfahren zum Verhindern der Überlastung von Hebelwerken zeigt Dokument DE 30 20 480 A (EPITOEGEPGYARTO VALLALAT). Hier ist an den Ausgang eines Komparators eine Schalteinheit, bestehend aus einem Verstärker und einem Relais angeschlossen.

Der Erfindung liegt die Aufgabe zugrunde, einen Grenzwertschalter zu schaffen, der die Eigenschaften einer digitalen Signalverarbeitung mit besonderen Sicherheitsmerkmalen vereinigt.

Diese Aufgabe wird bei einem Grenzwertschalter nach dem Oberbegriff des Anspruchs 1 mit den Merkmale des kennzeichnen Teils des Anspruchs 1 löst. Weiterbildungen und vorteilhafte Ausgestaltungen ergeben sich aus den Unteransprüchen.

Durch den digitalen programmgesteuerten Mikrocontroller können der Meßbereich sowie die Werte von Schaltkriterien, wie Grenzwerte, Hysterese, Minima/Maxima-Charakteristik, Ein- und Ausschaltverzögerung innerhalb der vorgegebenen Grenzen unabhängig voneinander frei konfiguriert und gezielt eingegeben werden. Meßgeräte zur Überprüfung der Eingaben sind nicht erforderlich. Vielmehr werden die eingegebenen Werte direkt von der Anzeigeeinheit angezeigt und können so unmittelbar kontrolliert und gegebenenfalls korrigiert werden.

Da die Meßsignale analog vorliegen, ist ein Analog-Digital-Wandler zwischen den Eingang der Meßsignale und den Eingang des Mikrocontrollers geschaltet. Ein zusätzlicher analoger Komparator, dem ebenfalls die analogen Meßsignale zugeführt werden, dient zur redundanten Überwachung. Dazu ist der Komparator mit den Schaltrelais verbunden und führt bei Überschreiten eines vorgegebenen absoluten Grenzwertes zu einer Notabschaltung der Schaltrelais. Durch die parallele Signalverarbeitung in unterschiedlichen Sicherheitseinrichtungen wird eine erhöhte Zuverlässigkeit gegen Störungen erreicht, so daß ein derartiger Grenzwertschalter die von den Prüfinstituten an derartige Einrichtungen gestellten Sicherheitsanforderungen erfüllen kann.

Kommt es innerhalb des Mikrocontrollers aus irgendwelchen Gründen zu einer Störung, die die Sicherheit beeinträchtigen würde, so führt ein Überschreiten der absoluten Grenzwerte dennoch zu einem Abschalten der Schaltrelais, da dies unabhängig vom analogen Komparator überwacht und gesteuert wird.

Vorzugsweise sind die Schaltrelais paarweise angesteuert und wenigstens die Schießerkontakte der Schaltrelaispaare sind in Serie geschaltet. Durch diese Maßnahme kann der Ausgangsstromkreis auch dann noch geöffnet werden, wenn eines der Steuerelemente im Steuerkreis eines Schaltrelais ausfällt oder das Schaltrelais blockiert.

Darüberhinaus kann zusätzlich zu den in Serie gestalteten Schießerkontakten je eine Schmelzsicherung ebenfalls in Serie geschaltet sein. In diesem Fall wird der Ausgangsstromkreis auch dann noch geöffnet, wenn die Kontakte beider Schaltrelais durch Überstrom verschweißt sind.

Den Schaltrelais können eingangsseitig Stromsensoren zugeordnet sein, die mit dem Mikrocontroller verbunden sind und deren Signale von Mikrocontroller ausgewertet werden. Mittels der Stromsensoren läßt sich der Eingangsstromkreis der Schaltrelais überwachen. Außerdem ist die Voraussetzung geschaffen, die Funktion des analogen Komparators ebenfalls überwachen zu können.

Vorzugsweise sind diese Stromsensoren als Optokoppler ausgebildet. Durch diese Ausgestaltung wird eine galvanische Trennung vom Meßstromkreis zum Rückführungsstromkreis erzielt.

Der Mikrocontroller kann mit einem Prüfeingang des analogen Komparators verbunden sein, über den in zeitlichen Abständen Prüfsignale eingespeist werden, die den vorgegebenen absoluten Grenzwert des analogen Komparators überschreiten und die Notabschaltung der Schaltrelais einleiten. Die Signalantworten des analogen Komparators lassen sich mittels der den Schaltrelais zugeordneten Stromsensoren vom Mikrocontroller überwachen und die Prüfsignale vor Ansprechen der Schaltrelais abschalten.

Diese Maßnahme führt zu einer weiteren Erhöhung der Sicherheit, da in kurzen zeitlichen Abständen auch die Funktion des analogen Komparators überprüft wird, indem durch Beaufschlagung mit den Prüfsignalen Überlastzustände simuliert werden. Diese Überlastzustände leiten eine Einschaltung der Schaltrelais aber lediglich ein, führen jedoch nicht zu einem Schaltvorgang, so daß die Prüfung den normalen Betrieb nicht stört. Dies beruht darauf, daß die Schaltträgheit der Schaltrelais ausgenutzt wird, wenn eine Stromspitze im Eingangskreis detektiert wird, aber die Prüfsignale abgeschaltet werden, ehe die Schaltrelais ansprechen können.

Außerdem können den Eingängen des Analog-Digital-Wandlers und des Komparators Spannungssensoren zugeordnet sein, die mit dem Mikrocontroller verbunden sind und deren Signale vom Mikrocontroller ausgewertet werden. Mit diesen Spannungssensoren kann das Potential am Eingang kontrolliert werden, wodurch sich Unterbrechungen oder Kurzschlüsse der Meß- oder Sensorleitungen erkennen lassen.

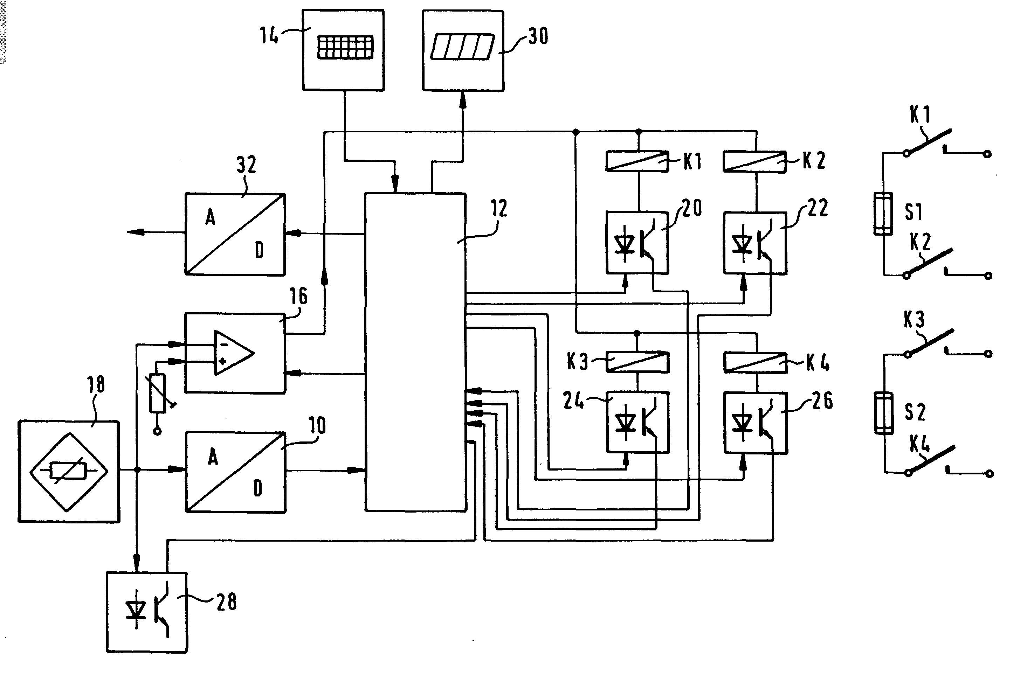

Nachfolgend wird die Erfindung anhand eines Ausführungsbeispiels erläutert, das in der Zeichnung dargestellt ist. Die Zeichnung zeigt ein Blockschaltbild eines Grenzwertschalters in einer Kraftmeßanwendung.

Der Grenzwertschalter umfaßt eine Steuereinheit, die ihrerseits aus einem Analog-Digital-Wandler 10 und einem Mikrocontroller 12 besteht sowie ferner vier Schaltrelais K1, K2, K3 und K4, eine Anzeigeeinheit 30, eine Eingabeeinheit 14 und einen analogen Komparator 16.

Die Meßsignale werden hier von Kraftsensoren 18 erfaßt, die als Dehnungsmeßstreifen ausgebildet und in einer Brückenschaltung verschaltet sind. Die Meßsignale werden von der Brückendiagonale als Spannungsdifferenzen ausgegeben und liegen sowohl am Eingang des Analog-Digital-Wandlers 10 als auch am Eingang des Komparators 16 an. Im normalen Betriebsfall werden die von den Kraftsensoren 18 gelieferten Meßsignale anhand der über die Eingabeeinheit 14 eingegebenen Parameter vom Mikrocontroller 12 überwacht und das Ein- und Ausschalten der Schaltrelais K1, K2, K3 und K4 gesteuert. Tritt beispielsweise bei eingeschalteten Schaltrelais K1, K2, K3 und K4, die einen Antrieb steuern, eine Überlast auf, so wirkt sich dieser Zustand auf die von den Kraftsensoren 18 erfaßten Signale aus. Der Mikrocontroller 12 wertet diese Signale als Überlastzustand aus, worauf die Schaltrelais K1, K2, K3 und K4 stromlos gesteuert werden.

Kommt es durch irgendwelche Störungen des Analog-Digital-Wandlers 10 oder des Mikrocontrollers 12 zu einem Versagen, so daß bei Überlast keine Abschaltung durch den Mikrocontroller 12 stattfindet, so steht als zusätzliche Sicherheit noch der analoge Komparator 16 zur Verfügung, der mittels eines Trimmpotis auf einen absoluten Grenzwert eingestellt ist und bei Überschreitung dieses Grenzwertes unabhängig vom Mikrocontroller 12 die Schaltrelais K1, K2, K3 und K4 notabschaltet.

Die Schaltrelais K1, K2, K3 und K4 werden paarweise angesteuert. In den Detailzeichnungen zu den Ausgangskreisen des Schaltrelais K1, K2, K3 und K4 ist dargestellt, daß die Schließerkontakte der Schaltrelaispaare K1, K2; K3, K4 in Serie geschaltet sind. Zusätzlich zu den in Serie geschalteten Schließerkontakten ist noch je eine Schmelzsicherung S1, S2 ebenfalls in Serie geschaltet.

Hierdurch wird auch ausgangsseitig die schädliche Auswirkung einer Störungsmöglichkeit beseitigt, die auftreten kann, wenn eines der Schaltrelais durch fehlerhafte Ansteuerung oder mechanische Blockierung eingeschaltet bleibt. In diesem Fall führt die Öffnung des anderen Schaltrelais dennoch zu einer Unterbrechung des Stromkreises. Die zusätzliche Schmelzsicherung sorgt dafür, daß selbst bei dem höchst unwahrscheinlichen Fall des Kontaktschweißens beider Schaltrelaiskontakte in Folge eines Überstromes der Ausgangsstromkreis dann durch Auslösen der Sicherung unterbrochen wird.

Ferner sind den Schaltrelais K1, K2, K3 und K4 eingangsseitig Stromsensoren 20, 22, 24, 26 zugeordnet, die mit dem Mikrocontroller 12 verbunden sind. Die Stromsensoren 20, 22, 24, 26 sind als Optokoppler ausgebildet. Somit läßt sich ein im Eingangskreis der Schaltrelais K1, K2, K3 und K4 fließender Strom wertemäßig ermitteln und der Wert mit galvanischer Trennung auf den Mikrocontroller 12 rückführen und auswerten. Dadurch ist eine interne Überprüfung der Schaltfunktion des Mikrocontrollers 12 und der Steuerleitungen einschließlich der Schaltrelaisspulen möglich.

Der Mikrocontroller 12 ist ferner mit einem Prüfeingang des analogen Komparators 16 verbunden. Über diesen Prüfeingang werden in zeitlichen Abständen Prüfsignale eingespeist, die den vorgegebenen absoluten Grenzwert des analogen Komparators 16 überschreiten. Diese Prüfsignale leiten eine Notabschaltung der Schaltrelais K1, K2, K3 und K4 ein, die als Stromspitze von den Stromsensoren 20, 22, 24, 26 erfaßt und dem Mikrocontroller 12 rückgemeldet wird. Ehe die Stromspitze jedoch im normalen störungsfreien Zustand zu einem Schaltvorgang der Schaltrelais K1, K2, K3 und K4 führen kann, wird das Prüfsignal abgeschaltet, so daß keine Beeinträchtigung des laufenden Betriebes eintritt, die Funktionsüberprüfung des Komparators aber durchgehend möglich ist. In einer praktischen Ausführung können die Prüfsignale im Abstand von einer Sekunde gegeben werden.

Weiterhin sind mit den Ausgängen der Kraftsensoren 18 und den Eingängen des Analog-Digital-Wandler 10 beziehungsweise des Komparators 16 Spannungssensoren 28 verbunden, die das Potential an den Eingängen erfassen. Kommt es zu einer Unterbrechung der Versorgungsspannung für die Dehnungsmeßbrücke oder zu einem Kurzschluß, so wirkt sich dieser Fall als deutliche Potentialänderung aus, die von den Spannungssensoren erfaßt 28 und vom Mikrocontroller 12 ausgewertet wird.

Die digitale Arbeitsweise des Mikrocontrollers 12 ermöglicht es, im Rahmen vorgegebener Grenzen die Schaltkriterien und Grenzwerte frei zu konfigurieren und einzugeben. Bei einer praktischen Ausführung lassen sich maximal zwei Grenzwerte angeben. Die Parameter der Grenzwerte umfassen jeweils die Schaltschwelle der Grenzwerte, deren Hysterese, die Grenzwerte als Minimal- oder Maximalwertüberwachung, sowie getrennt einstellbare Verzögerungen für das Ein- und Ausschalten. Ferner läßt sich der Analog-Digital-Wandler 10 auf den Nullpunkt und den Endwert kalibrieren und ebenfalls die Anzeigeeinheit 30 auf den Nullpunkt- und den Endpunktwert einstellen. Weiterhin können auch die Meßintervalle eingestellt werden. Darüberhinaus ist es für Wartungs- und Einrichtungszwecke möglich, über das Auswahlmenü einen Menüpunkt zu wählen, der eine direkte Steuerung der Schaltrelais unter vorübergehender Umgehung des Grenzwertschalters ermöglicht, ohne daß hierfür ein mechanischer Eingriff in den Grenzwertschalter nötig ist.

Die Meßwerte können in digitaler oder auch analoger Form durch Zwischenschaltung eines Digital-Analog-Wandlers 32 fernübertragen und dort angezeigt werden. Ebenfalls ist es möglich, mit Hilfe einer digitalen Schnittstelle auch die Anzeige und Eingabe sowie die Wartung ferngesteuert durchzuführen.

Durch die beschriebene Ausgestaltung des Grenzwertschalters wird ein Höchstmaß an Sicherheit gewährleistet, da alle denkbaren Fehlermöglichkeiten abgefangen werden können. Von besonderer Bedeutung ist hierbei, daß zwei unterschiedlich aufgebaute Systeme zur Grenzwerterfassung, nämlich eine analoge und eine digitale Einheit vorhanden sind, die redundant arbeiten, so daß bei Ausfall einer der beiden Einheiten Fehler trotzdem erkannt werden. Außerdem wird mittels des Mikrocontrollers eine ständige Überprüfung des analogen Komparators durchgeführt, so daß Störungen dieses Systems sofort entdeckt werden und dadurch auch der Fall vermieden wird, daß der als übergeordnete Kontrolle dienende analoge Komparator bei eigenem Versagen nicht mehr die Kontrollfunktion übernehmen kann.

## Patentansprüche

1. »Grenzwertschalter mit einer Steuereinheit (10,12), welche eingangsseitig analoge Meßsignale erhält und auswertet und ausgangsseitig ein Schaltrelais (K1, K2, K3, K4) steuert, sowie einer Anzeigeeinheit (30), wobei die Steuereinheit einen Analog-Digital-Wandler (10), dem die analogen Meßsignale zugeführt werden und einen digitalen programmgesteuerten Mikrocontroller (12) umfaßt, und der Mikrocontroller (12) mit einer digitalen Eingabeeinheit (14) zur Eingabe der Werte von Schaltkriterien verbunden ist, dadurch gekennzeichnet, daß zusätzlich ein analoger Komparator (16) vorgesehen ist, dem ebenfalls die analogen Meßsignale zugeführt werden und der ausgangsseitig bei Überschreiten eines vorgegebenen absoluten Grenzwertes unabhängig von der Steuereinheit die Schaltrelais (K1, K2, K3, K4) notabschaltet.

2. Grenzwertschalter nach Anspruch 1, dadurch gekennzeichnet, daß die Schaltrelais (K1, K2, K3, K4) paarweise angesteuert sind und wenigstens die Schließerkontakte der Schaltrelaispaare (K1, K2; K3, K4) in Serie geschaltet sind.

3. Grenzwertschalter nach Anspruch 2, dadurch gekennzeichnet, daß zusätzlich zu den in Serie geschalteten Schließerkontakten je eine Schmelzsicherung (S1, S2) ebenfalls in Serie geschaltet sind.

4. Grenzwertschalter nach einem der Ansprüche 1 bis 3, dadurch gekennzeichnet, daß den Schaltrelais (K1, K2, K3, K4) eingangsseitig Stromsensoren (20, 22, 24, 26) zugeordnet sind, die mit dem Mikrocontroller (12) verbunden sind und deren Signale vom Mikrocontroller (12) ausgewertet werden.

5. Grenzwertschalter nach Anspruch 4, dadurch gekennzeichnet, daß die Stromsensoren (20, 22, 24, 26) als Optokoppler ausgebildet sind.

6. Grenzwertschalter nach Anspruch 4 oder 5, dadurch gekennzeichnet, daß der Mikrocontroller (12) mit einem Prüfeingang des analogen Komparators (16) verbunden ist, über den in zeitlichen Abständen Prüfsignale eingespeist werden, die den vorgegebenen absoluten Grenzwert des analogen Komparators (16) überschreiten und die Notabschaltung der Schaltrelais (K1, K2, K3, K4) einleiten und daß die Signalantworten des analogen Komparators (16) mittels der den Schaltrelais (K1, K2, K3, K4) zugeordnet Stromsensoren (20, 22, 24, 26) vom Mikrocontroller (12) überwacht werden und die Prüfsignale vor Ansprechen der Schaltrelais (K1, K2, K3, K4) abgeschaltet werden.

7. Grenzwertschalter nach einem der Ansprüche 1 bis 6, dadurch gekennzeichnet, daß den Eingängen des Analog-Digital-Wandlers (10) und des Komparators (16) Spannungssensoren (28, 30) zugeordnet sind, die mit dem Mikrocontroller (12) verbunden sind und deren Signale vom Mikrocontroller (12) ausgewertet werden.

## Claims

1. Limit switch with a control unit (10, 12), which at the input side receives and evaluates analog measurement signals and at the output side controls a switching relay (K1, K2, K3, K4), as well as a display unit, in which the control unit comprises an analog-digital converter (10) to which are supplied the analog measurement signals, and a digital program-controlled microcontroller (12), which is connected to a digital input unit (14) for inputting values of switching criteria, characterized in that additionally an analog comparator (16) is provided, to which are also supplied the analog measurement signals and which at the output side emergency deenergizes the switching relays (K1, K2, K3, K4), independently of the control unit, on exceeding a predetermined, absolute limit.

2. Limit switch according to claim 1, characterized in that the switching relays (K1, K2, K3, K4) are controlled pairwise and at least the make contacts of the switching relay pairs (K1, K2; K3, K4) are connected in series.

3. Limit switch according to claim 2, characterized in that in addition to the make contacts connected in series, in each case one fuse (S1, S2) is also connected in series.

4. Limit switch according to one of the claims 1 to 3, characterized in that on the input side with the switching relays (K1, K2, K3, K4) are associated current sensors (20, 22, 24, 26), which are connected to the microcontroller (12) and whose signals are evaluated by the microcontroller (12).

5. Limit switch according to claim 4, characterized in that the current sensors (20, 22, 24, 26) are constructed as optical couplers.

6. Limit switch according to claim 4 or 5, characterized in that the microcontroller (12) is connected to a test input of the analog comparator (6) by means of which at time intervals test signals are fed in which exceed the predetermined, absolute limit of the analog computer (16) and initiate the emergency deenergization of the switching relays (K1, K2, K3, K4) and that the signal responses of the analog comparator (16) are monitored by the microcontroller (12) by means of the current sensors (20, 22, 24, 26) associated with the switching relays (K1, K2, K3, K4) and switch off the test signals prior to the operation of the switching relays (K1, K2, K3, K4).

7. Limit switch according to one of the claims 1 to 6, characterized in that with the inputs of the analog-digital converter (10) and the comparator (16) are associated voltage sensors (28, 30), which are connected to the microcontroller (12) and whose signals are evaluated by said microcontroller (12).

## Revendications

1. Interrupteur à seuil muni d'une unité de commande (10, 12) et d'une unité d'affichage (30), l'unité de commande (10, 12) recevant et évaluant, en entrée, des signaux de mesure analogiques et commandant, en sortie, un relais de commutation (K1, K2, K3, K4), dans lequel l'unité de commande comprend un convertisseur analogique/numérique (10), auquel sont appliqués les signaux de mesure analogiques, et un microcontrôleur numérique commandé par programme (12), le microcontrôleur (12) étant relié à une unité d'entrée (14) pour l'introduction de valeurs de critère de commutation, caractérisé en ce que, de plus, il est prévu un comparateur analogique (16) auquel sont également appliqués les signaux de mesure analogiques et qui, en sortie, lors d'un dépassement d'un seuil absolu prédéterminé, provoque la mise au repos d'urgence des relais de commutation (K1, K2, K3, K4), indépendamment de l'unité des commande.

2. Interrupteur à seuil suivant la revendication 1, caractérisé en ce que les relais de commutation (K1, K2, K3, K4) sont commandés par paires et en ce qu'au moins les contacts de travail des paires de relais de commutation (K1, K2 ; K3, K4) sont montés en série.

3. Interrupteur à seuil suivant la revendication 2, caractérisé en ce que, en plus des contacts de travail montés en série, est respectivement monté également en série un dispositif de sécurité fusible (S1, S2).

4. Interrupteur à seuil suivant l'une des revendications 1 à 3, caractérisé en ce qu'aux relais de commutation (K1, K2, K3, K4) sont associés, en entrée, des capteurs de courant (20, 22, 24, 26) qui sont reliés au microcontrôleur (12) et dont les signaux sont évalués par le microcontrôleur (12).

5. Interrupteur à seuil suivant la revendication 4, caractérisé en ce que les capteurs de courant (20, 22, 24, 26) sont formés de coupleurs otiques.

6. Interrupteur à seuil suivant la revendication 4 ou 5, caractérisé en ce que le microcontrôleur (12) est relié à une entrée de test d'un comparateur analogique (16), par laquelle, à intervalles temporels, sont appliqués des signaux de test qui dépassent les valeurs limites absolues prédéterminées du comparateur analogique (16) et qui déclenchent la mise au repos d'urgence des relais de commutation (K1, K2, K3, K4), en ce que les signaux de réponse du comparateur analogique (16) sont surveillés au moyen des capteurs de courant (20, 22, 24, 26) associés aux relais de commutation (K1, K2, K3, K4) par le microcontrôleur (12) et en ce que les signaux de test sont déconnectés avant la réponse des relais de commutations (K1, K2, K3, K4).

7. Interrupteur à seuil suivant la revendication 1, caractérisé en ce qu'aux entrées du convertisseur analogique/numérique (10) et du comparateur (16) sont associés des capteurs de tension (28) qui sont reliés au microcontrôleur (12) et dont les signaux sont évalués par le microcontrôleur (12).
